# EUROPEAN PATENT APPLICATION

(11) **EP 4 592 456 A1**
(43) Date of publication of application: **30.07.2025**
(21) Application number: 24217814.3
(22) Date of filing: 05.12.2024
(51) Int. Cl.: E02F 3/32, B60K 11/04, E02F 9/08, E02F 9/20

(54) **WORKING MACHINE**

(30) Priority: 29.01.2024 JP 2024011102
(71) Applicant: KUBOTA CORPORATION, Osaka-shi, Osaka 556-8601 (JP)
(72) Inventor: ARAI, Yasuhiko, SAKAI-SHI, OSAKA, 5900908 (JP)
(74) Representative: Cabinet Beau de Loménie

(57) **Abstract**

A working machine includes a machine body, a hood (13) to define an exterior of the machine body, and a forced-air cooling heat exchanger (7, 8) to perform heat exchange between air and a fluid. The hood (13) includes a ventilation opening (130, 131). The forced-air cooling heat exchanger (7, 8) is attached to the hood (13) at a position corresponding to the ventilation opening (130, 131).

## Description

### BACKGROUND OF THE INVENTION

### Field of the Invention

The present invention relates to a working machine including a forced-air cooling heat exchanger.

### Description of the Related Art

A slewable working machine disclosed in Japanese Unexamined Patent Application Publication No. 2021-080709 includes a forced-air cooling heat exchanger including a fan and a shroud that guides cooling air generated by driving the fan.

### SUMMARY OF THE INVENTION

In the slewable working machine described in Japanese Unexamined Patent Application Publication No. 2021-080709, cooling air is discharged to the outside through an opening (a vent hole) of an exterior cover (a hood) by the shroud. However, if the sealing performance between the shroud and the hood is insufficient, the airflow rate of the cooling air may decrease, resulting in reduced heat exchange performance, or the air warmed by a heat exchanger may circulate within a machine body, potentially causing adverse effects. Thus, it is necessary to airtightly connect the periphery of the vent hole of the hood and the shroud, which requires a complicated operation such as adjustment to appropriately compress a sealing material while considering variations among individual machine bodies. There is also a problem of an increased number of components due to the sealing structure.

Accordingly, the present invention provides a working machine in which a forced-air cooling heat exchanger can be disposed with enhanced heat exchange efficiency without the need for a complicated operation.

A working machine according to a first aspect of an example of the present invention includes a machine body, a hood to define an exterior of the machine body, and a forced-air cooling heat exchanger to perform heat exchange between air and a fluid. The hood includes a ventilation opening. The forced-air cooling heat exchanger is attached to the hood at a position corresponding to the ventilation opening.

The hood, including the ventilation opening, may include a cover that is openable and closable. The forced-air cooling heat exchanger may be attached to an inner surface of the cover.

The cover may include an attachment portion to which the forced-air cooling heat exchanger is to be attached. The attachment portion may be a frame that surrounds the ventilation opening and may be configured to have the forced-air cooling heat exchanger fitted thereto.

The frame may be configured to provide airtight seal between the forced-air cooling heat exchanger and the ventilation opening.

The machine body may include a support frame that supports the cover, and a hinge that couples the support frame and the cover to each other such that the support frame and the cover are pivotable relative to each other around a support shaft. The working machine may include a flow passage to allow the fluid to flow therethrough, the flow passage being connected to equipment provided at the machine body and to the forced-air cooling heat exchanger attached to the inner surface of the cover. The flow passage may be provided in such a manner as to allow, while being connected to the equipment and the forced-air cooling heat exchanger, the cover to pivot around the support shaft.

The forced-air cooling heat exchanger may include a fan, and a heat exchange unit located at a position to face the fan, and including a heat exchange portion to perform heat exchange between cooling air generated by driving the fan and the fluid. The heat exchange portion or the fan may face the ventilation opening.

The working machine may include a working device attached to the machine body and to be actuated by a hydraulic fluid that is the fluid. The forced-air cooling heat exchanger may be a forced-air cooling oil cooler to perform heat exchange between the hydraulic fluid and air.

The working machine may include a cooling-target device to be cooled by cooling water that is the fluid. The forced-air cooling heat exchanger may be a forced-air cooling radiator to perform heat exchange between the cooling water and air.

The working machine may include a working device attached to the machine body and to be actuated by a hydraulic fluid that is the fluid, and a cooling-target device to be cooled by cooling water that is the fluid. The forced-air cooling heat exchanger may include a forced-air cooling oil cooler to perform heat exchange between the hydraulic fluid and air, and a forced-air cooling radiator to perform heat exchange between the cooling water and air.

The forced-air cooling oil cooler may include an oil cooler fan to generate cooling air. The forced-air cooling radiator may include a radiator fan to generate cooling air.

The hood may include, as the ventilation opening, a first ventilation opening to allow flow of cooling air for the forced-air cooling oil cooler, and a second ventilation opening to allow flow of cooling air for the forced-air cooling radiator.

The hood, including the ventilation opening, may include a cover that is openable and closable. The machine body may include a support frame to support the cover, and a hinge to couple the support frame and the cover to each other such that the support frame and the cover are pivotable relative to each other around a support shaft. The forced-air cooling oil cooler and the forced-air cooling radiator may be positioned at an inner surface of the cover and juxtaposed along a direction perpendicular to a direction in which the support shaft extends.

The working machine may include a battery unit, and an electric motor to be driven by electric power supplied from the battery unit. The cooling-target device may be at least one of the battery unit and the electric motor.

The forced-air cooling heat exchanger may include a fan, and a heat exchange unit located at a position to face the fan and including a heat exchange portion to perform heat exchange between cooling air generated by driving the fan and the fluid. The fan may be configured to suck, as the cooling air, air surrounding the battery unit and discharge the air to outside the machine body through the ventilation opening, or to suck, as the cooling air, air outside the machine body through the ventilation opening and supply the air to surroundings of the battery unit.

In the working machine according to the present invention, a forced-air cooling heat exchanger can be disposed with enhanced heat exchange efficiency without the need for a complicated operation.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a perspective view of a working machine according to a first embodiment of the present invention.
FIG. 2 is a side view of the working machine according to the first embodiment.
FIG. 3 is a rear view of the working machine according to the first embodiment.
FIG. 4 is a side view of the working machine according to the first embodiment in a state where a rear hood is opened.
FIG. 5 is an enlarged view of the rear hood of the working machine according to the first embodiment, with the rear hood in an opened state.
FIG. 6 is an enlarged view of the working machine according to the first embodiment in a state where the rear hood is opened and where blowing fans of forced-air cooling heat exchangers are removed from the opened rear hood.
FIG. 7 is an enlarged view of the working machine according to the first embodiment in a state where the rear hood is opened and where the blowing fans and heat exchange units of the forced-air cooling heat exchangers are removed from the opened rear hood.
FIG. 8 is an exploded perspective view of the forced-air cooling heat exchangers of the working machine according to the first embodiment and is a schematic perspective view including a portion of the rear hood.
FIG. 9 is an exploded perspective view of forced-air cooling heat exchangers of a working machine according to another embodiment of the present invention and is a schematic perspective view including a portion of a rear hood.
FIG. 10 is an exploded perspective view of a forced-air cooling heat exchanger of a working machine according to another embodiment of the present invention and is a schematic perspective view including a portion of a rear hood.
FIG. 11 is an exploded perspective view of a forced-air cooling heat exchanger of a working machine according to still another embodiment of the present invention and is a schematic perspective view including a portion of a rear hood.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

A working machine according to an embodiment of the present invention will be described below with reference to the drawings.

The working machine of the present embodiment is a backhoe that is capable of traveling. In the following description, straight travel directions (forward and backward directions) of the working machine will be collectively referred to as a first direction. In the first direction of the working machine, the side toward which the working machine moves forward will be referred to as the front side, and the side toward which the working machine moves rearward will be referred to as the rear side. A direction that is perpendicular to the first direction and to the vertical direction will be referred to as a second direction, and the vertical direction will be referred to as a third direction.

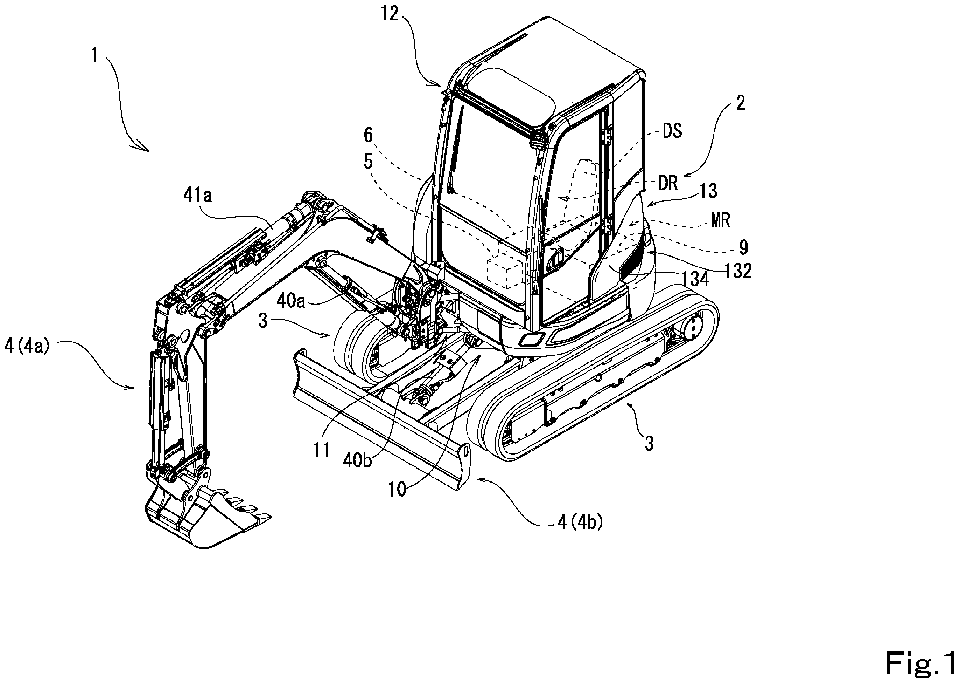

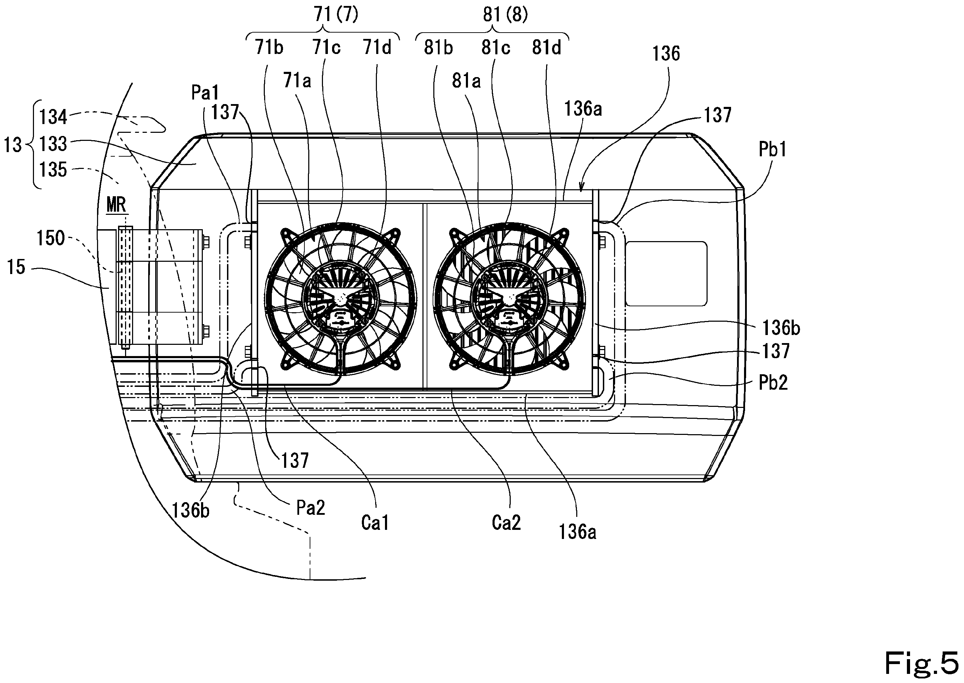

As illustrated in FIG. 1 to FIG. 3, a working machine 1 includes a machine body 2 and forced-air cooling heat exchangers 7 and 8 (see FIG. 5) that perform heat exchange between air and a fluid.

More specifically, the working machine 1 includes the machine body 2, traveling devices 3 that support the machine body 2 such that the machine body 2 can travel, working devices 4 that are attached to the machine body 2, a hydraulic system that causes the traveling devices 3 and the working devices 4 to operate, the hydraulic system including a hydraulic pump 5 that delivers a hydraulic fluid, and a prime mover 6 that drives the hydraulic pump 5. The working machine 1 includes, as one of the forced-air cooling heat exchangers, a forced-air cooling oil cooler 7 that performs heat exchange between the hydraulic fluid, which is a fluid, and the air (see FIG. 5). In the present embodiment, the prime mover 6 is an electric motor. Accordingly, the working machine 1 includes a battery 9 that supplies electric power to the prime mover (electric motor) 6. In the present embodiment, the battery 9 is a battery unit that includes a plurality of battery cells electrically connected to each other. Both the electric motor 6 and the battery (battery unit) 9 employ water cooling. In other words, the electric motor 6 and the battery (battery unit) 9 are cooling-target devices to be cooled by cooling water that is a fluid. Accordingly, the working machine 1 includes, as the other forced-air cooling heat exchanger, a forced-air cooling radiator 8 that performs heat exchange between the cooling water, which is a fluid, and the air. The prime mover 6 is not limited to an electric motor and may be, for example, an engine or may be a hybrid type combining an engine and an electric motor.

The working machine 1 includes the pair of traveling devices 3. The pair of traveling devices 3 are arranged opposingly apart from each other in the second direction. Each of the traveling devices 3 may be a crawler traveling device or a tire traveling device. In the present embodiment, the pair of traveling devices 3 are crawler traveling devices.

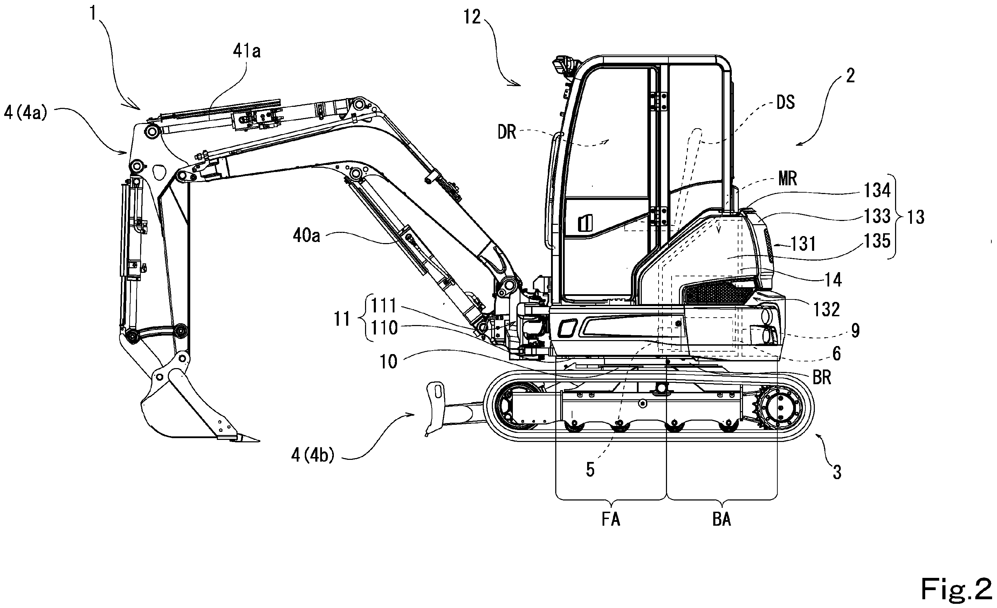

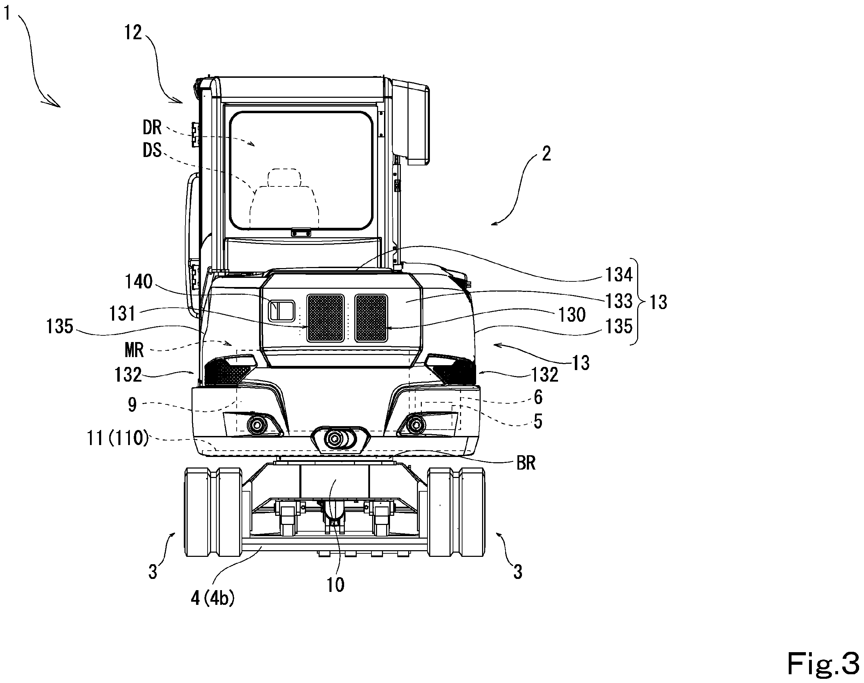

As illustrated in FIG. 2 and FIG. 3, the machine body 2 includes a traveling frame 10 that is supported by the pair of traveling devices 3, a slewing frame 11 that is slewable around an axis extending in the third direction on the traveling frame 10, an operator's seat DS that is disposed on the slewing frame 11, and an operator's seat protection mechanism 12 that covers and protects the operator's seat DS. The machine body 2 further includes a hood 13 constituting an exterior of the machine body 2. In the present embodiment, the hood 13 faces devices as equipment on the slewing frame 11 (a base plate 110, which will be described later) from at least the upper side and the rear side. In the present embodiment, the machine body 2 includes a support frame 14 (FIG. 2) that supports at least a cover (a rear hood) 133 of the hood 13, which will be described later. In the present embodiment, the support frame 14 supports the entire hood 13 (a plurality of components forming the hood 13 (the rear hood 133, an upper hood 134, and side hoods 135 and 135, which will be described later)).

As illustrated in FIG. 2, the slewing frame 11 includes the base plate 110 and a device coupling portion 111 to which a shovel 4a that will be described later and that serves as one of the working devices 4 is coupled, the device coupling portion 111 being connected to one end portion of the base plate 110 in the first direction.

A slewing bearing BR that is fixed to an upper surface of the traveling frame 10 is fixed to a lower surface of the base plate 110. As a result, the base plate 110 (slewing frame 11) is rotatable with respect to the traveling frame 10 around the axis extending in the third direction (the slewing center of the slewing bearing BR).

A step that will be described later and that is a floor plate of an operator's compartment DR is disposed in a region (hereinafter referred to as a "front region") FA of the base plate 110 that is located on the front side in the first direction. The step is disposed above the base plate 110 with a space therebetween. Equipment such as the hydraulic pump 5, the prime mover 6, the battery 9, and the like are arranged in a region (hereinafter referred to as a "rear region") BA of the base plate 110 that is located on the rear side in the first direction. In addition, the support frame 14 is disposed in the rear region BA.

The operator's seat protective structure 12 of the present embodiment is a so-called cabin that covers the entire operator's seat DS and protects an operator seated in the operator's seat DS (defines the operator's compartment DR). The operator's seat protective structure 12 may be a so-called canopy including a roof that covers above the head of the operator seated in the operator's seat DS and a support column that supports the roof. The working machine 1 may be configured without the operator's seat protective structure 12.

As illustrated in FIG. 1, the working machine 1 includes, as the working devices 4, the shovel 4a that is attached to the slewing frame 11 (the device coupling portion 111) and a dozer 4b that is attached to the traveling frame 10. The shovel 4a and the dozer 4b are hydraulic devices and include hydraulic cylinders 40a, 41a, and 40b that extend and retract by receiving the hydraulic fluid delivered by the hydraulic pump 5 and discharging the hydraulic fluid so as to exhibit the functions of the shovel 4a and the dozer 4b.

As illustrated in FIG. 3, the hood 13 includes ventilation openings 130, 131, and 132 that allow communication between the inside and the outside.

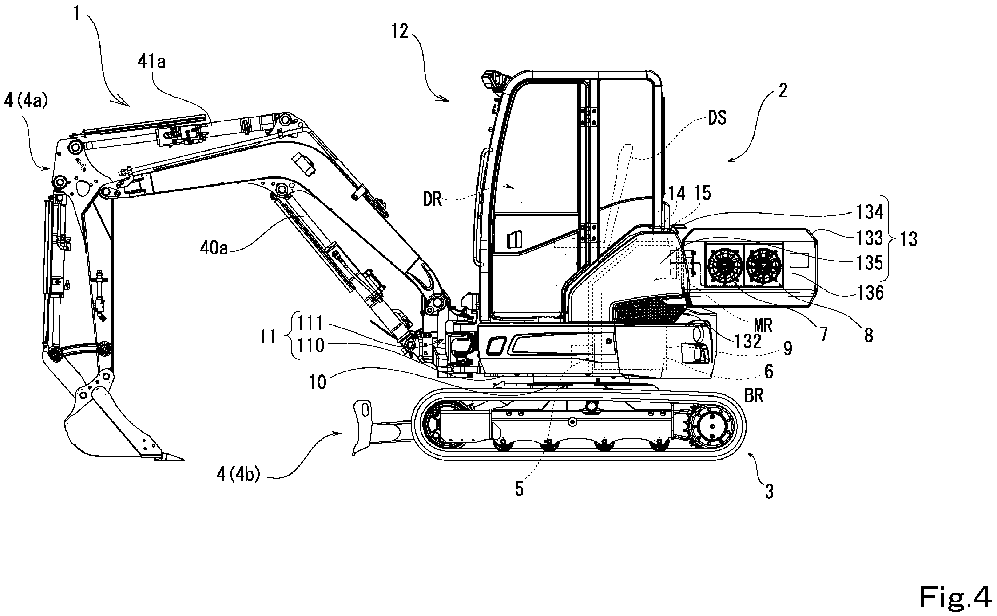

In the present embodiment, the hood 13 includes a cover 133 that can be opened and closed. The cover 133 includes an attachment portion 136 (see FIG. 4) to which the forced-air cooling heat exchangers 7 and 8 are attached. In the present embodiment, the cover 133 is the rear hood 133, including the ventilation openings 130 and 131, that is located rearward of the devices (e.g., the prime mover 6, the battery 9, and the like) as the equipment on the base plate 110.

More specifically, the hood 13 includes the upper hood 134 located above the equipment, the pair of side hoods 135 arranged one each on both sides of the equipment in the second direction, and the rear hood 133 located rearward of the equipment. The pair of side hoods 135 each include the ventilation opening 132 to allow communication between the inside and the outside, and the rear hood 133 includes the ventilation openings 130 and 131 to allow communication between the inside and the outside. The hood 13 defines an equipment accommodating chamber MR to accommodate the equipment including the devices such as the prime mover 6, the battery (battery unit) 9, and the like.

The working machine 1 of the present embodiment is configured to suck the outside air as cooling air into the equipment accommodating chamber MR (around the battery (battery unit) 9) through the ventilation openings 132 of the pair of side hoods 135 and discharge the air inside the equipment accommodating chamber MR (around the battery (battery unit) 9) to the outside through the ventilation openings 130 and 131 of the rear hood 133. In other words, in the present embodiment, the ventilation openings 132 of the pair of side hoods 135 and 135 are intake ports to suck the outside air into the equipment accommodating chamber MR, and the ventilation openings 130 and 131 of the rear hood 133 are exhaust ports to discharge the air inside the equipment accommodating chamber MR to the outside. In the present embodiment, the intake of the outside air into the equipment accommodating chamber MR and the discharge of the air inside the equipment accommodating chamber MR to the outside are performed by forced airflow (forced ventilation) that is produced by driving fans (blowers) 71 and 81 (described later) of the forced-air cooling heat exchangers 7 and 8 (forced-air cooling oil cooler 7 and forced-air cooling radiator 8). Based on the premise that forced airflow is provided by the fans 71 and 81 of the forced-air cooling heat exchangers 7 and 8 (forced-air cooling oil cooler 7 and forced-air cooling radiator 8), a configuration may be employed in which the outside air is sucked as cooling air into the equipment accommodating chamber MR (around the battery (battery unit) 9) through the ventilation openings 130 and 131 of the rear hood 133 and in which the air inside the equipment accommodating chamber MR (around the battery (battery unit) 9) is discharged to the outside through the ventilation openings 132 of the side hoods 135 and 135 and the like.

In the present embodiment, the ventilation openings (intake ports) 132 of the pair of side hoods 135 and 135 and the ventilation openings (exhaust ports) 130 and 131 of the rear hood 133 are each provided with a mesh (net member), allowing for ventilation while preventing access (entry of a hand, a finger, or an object) into the equipment accommodating chamber MR from the outside. Instead of the mesh (net member), a grille or a louver may be provided at each of the ventilation openings 130, 131, and 132.

As illustrated in FIG. 2 and FIG. 4, the rear hood 133 can be opened and closed. More specifically, as illustrated in FIG. 4 and FIG. 5, the machine body 2 includes a hinge 15 that couples the support frame 14 and the rear hood (cover) 133 to each other. As illustrated in FIG. 5, the hinge 15 has a support shaft 150 extending in the third direction. The hinge 15 couples one end side portion of the rear hood 133 in the second direction and the support frame 14 to each other. In this regard, as illustrated in FIG. 3, the rear hood 133 includes a notch (with a handle) 140 on the other end side portion thereof in the second direction such as to be used for opening and closing the rear hood 140.

By pulling the handle in the notch 140, which is provided on the other end side in the width direction (second direction), outward (rearward), the rear hood 133 pivots (rotates) around the support shaft 150 of the hinge 15, which is provided on the one end side in the width direction (second direction), so that the rear hood 133 can be opened and closed. The forced-air cooling heat exchangers 7 and 8 perform forced air cooling when the rear hood (cover) 133 is closed, and stop the forced air cooling when the rear hood (cover) 133 is open. In other words, the working machine 1 includes an opening/closing sensor that detects opening and closing of the rear hood (cover) 133 and that is electrically connected to a controller, which is disposed in the machine body 2, and the controller switches the ON/OFF of the fans 71 and 81 of the forced-air cooling heat exchangers 7 and 8 on the basis of a detection result of the opening/closing sensor. As a result, an operator does not approach the fans 71 and 81 while they are being driven, ensuring the safety of the operator.

In the present embodiment, the notch (with the handle) 140 is operable in conjunction with a locker to lock the rear hood 133. The locker can be switched between a locked state and an unlocked state in response to an instruction from the controller installed in the machine body 2. In the working machine 1 of the present embodiment, the locker is switched between the locked state and the unlocked state in response to a control signal output from the controller in accordance with the driving states of the fans 71 and 81 of the forced-air cooling heat exchangers 7 and 8. As a result, even if the operator operates the handle in the notch 140 while the fans 71 and 81 are being driven, the rear hood 133 is maintained in the closed state (cannot be opened). As described above, the working machine 1 has a double interlock function relating to the opening and closing of the rear hood 133. However, the interlock is not essential, and the working machine 1 may include only one of the above-described functions or may not include both of the above-described functions.

As illustrated in FIG. 5 to FIG. 8, the forced-air cooling heat exchangers 7 and 8 are fixed to the inner surface of the hood 13 at positions corresponding to the ventilation openings 130 and 131. The forced-air cooling heat exchanger 7 includes a heat exchange unit 70 and the fan 71. The heat exchange unit 70 includes a heat exchange portion 70a that includes a flow passage to allow flow of a fluid therethrough. The fan 71 includes a propeller 71b that is driven to rotate in a predetermined direction with respect to an axis thereof. The forced-air cooling heat exchanger 8 includes a heat exchange unit 80 and the fan 81. The heat exchange unit 80 includes a heat exchange portion 80a that includes a flow passage to allow flow of a fluid therethrough. The fan 81 includes a propeller 81b that is driven to rotate in a predetermined direction with respect to an axis thereof.

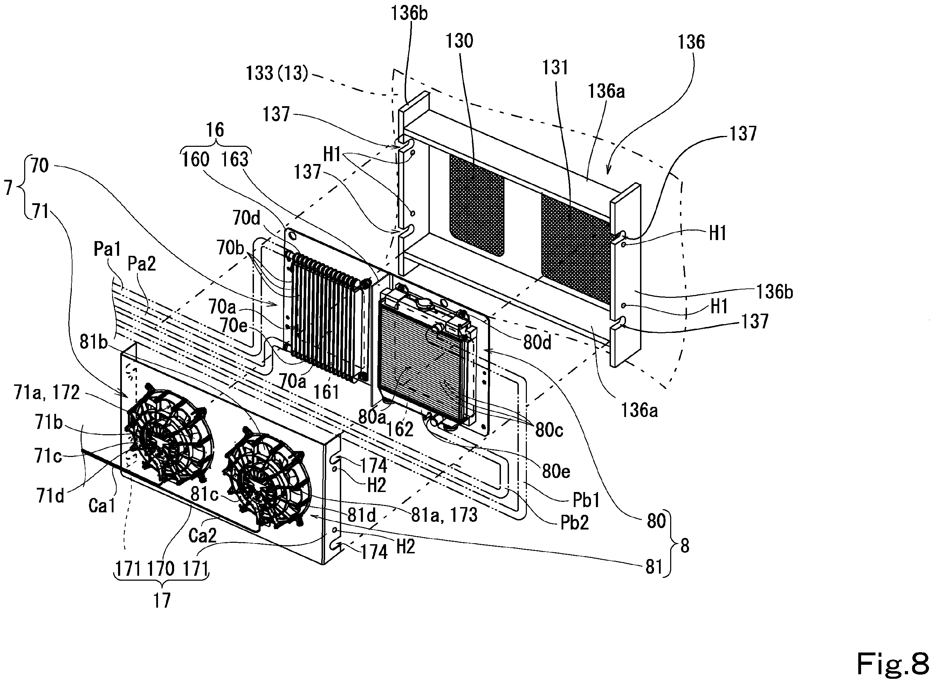

In the forced-air cooling heat exchangers 7 and 8, as illustrated in FIG. 8, the heat exchange units 70 and 80 are arranged such that the heat exchange portion 70a and the propeller 71b face each other and such that the heat exchange portion 80a and the propeller 81b face each other.

The heat exchange unit 70 is located at (attached to) the inner surface of the rear hood 133 such that the heat exchange portion 70a faces the ventilation opening 130, and the fan 71 faces a surface of the heat exchange unit 70 opposite to another surface of the heat exchange unit 70 facing the ventilation opening 130. The heat exchange unit 80 is located at (attached to) the inner surface of the rear hood 133 such that the heat exchange portion 80a faces the ventilation opening 131, and the fan 81 faces a surface of the heat exchange unit 80 opposite to another surface of the heat exchange unit 80 facing the ventilation opening 131. In the present embodiment, the fan 71 is configured to suck the air inside the equipment accommodating chamber MR and cause the air to pass through the heat exchange portion 70a of the heat exchange unit 70 and to be discharged from the ventilation opening 130. The fan 81 is configured to suck the air inside the equipment accommodating chamber MR and cause the air to pass through the heat exchange portion 80a of the heat exchange unit 80 and to be discharged from the ventilation opening 131.

In the present embodiment, the rear hood 133 includes, as the attachment portion 136 to which the forced-air cooling heat exchangers 7 and 8 are attached, a frame 136 that surrounds the ventilation openings 130 and 131. The forced-air cooling heat exchangers 7 and 8 can be fitted onto the inner surface of the frame 136, the inner surface facing the devices as the equipment (in the equipment accommodating chamber MR).

The working machine 1 of the present embodiment includes the forced-air cooling heat exchangers 7 and 8. More specifically, the working machine 1 includes, as the forced-air cooling heat exchanger 7, the forced-air cooling oil cooler 7 to perform heat exchange between the hydraulic fluid (a fluid) and the air (cooling air) and, as the forced-air cooling heat exchanger 8, the forced-air cooling radiator 8 to perform heat exchange between the cooling water (a fluid) and the air (cooling air). In other words, the working machine 1 includes, as the forced-air cooling heat exchangers 7 and 8, the forced-air cooling oil cooler 7 to cool the hydraulic fluid that circulates in the hydraulic system and the forced-air cooling radiator 8 to cool a coolant (cooling water) that cools the prime mover 6 and the battery 9.

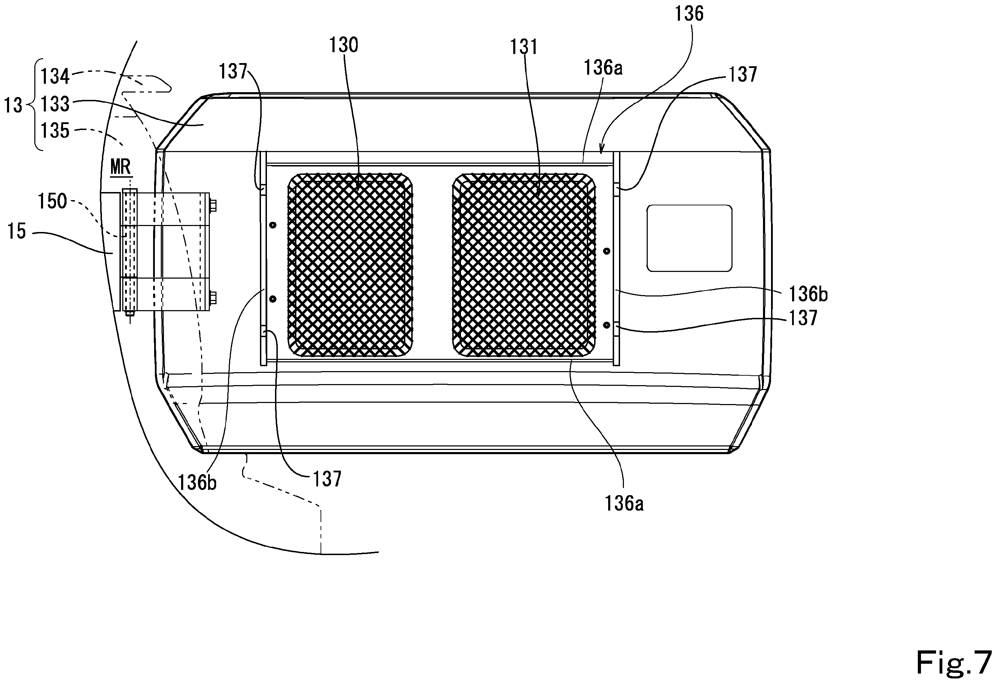

Accordingly, as illustrated in FIG. 7 and FIG. 8, the rear hood 133 includes, as ventilation openings, the first ventilation opening 130 that corresponds to the forced-air cooling oil cooler 7 and a second ventilation opening 131 that corresponds to the forced-air cooling radiator 8. In other words, the rear hood (cover) 133 has the first ventilation opening 130 to allow flow of the cooling air for the forced-air cooling oil cooler 7 and the second ventilation opening 131 to allow flow of the cooling air for the forced-air cooling radiator 8.

The first ventilation opening 130 and the second ventilation opening 131 of the rear hood 133 are juxtaposed (arranged side by side) in a direction perpendicular to the third direction (in the second direction in a state where the equipment accommodating chamber MR is closed). Accordingly, the forced-air cooling oil cooler 7 and the forced-air cooling radiator 8 are juxtaposed (arranged side by side) in a direction perpendicular to the third direction (in the second direction in a state where the equipment accommodating chamber MR is closed). That is, the forced-air cooling oil cooler 7 and the forced-air cooling radiator 8 are juxtaposed (arranged side by side) along a direction perpendicular to a direction in which the support shaft 150 of the hinge 15 extends.

As illustrated in FIG. 5, FIG. 6, and FIG. 8, the forced-air cooling oil cooler 7 includes the heat exchange unit 70 and the oil cooler fan (electric fan) 71. The heat exchange unit 70 includes the heat exchange portion 70a including the flow passage to allow the flow of the hydraulic fluid, which is a fluid, therethrough. The oil cooler fan 71 includes the propeller 71b and an electric motor 71d that rotationally drives the propeller 71b. In the forced-air cooling oil cooler 7, the oil cooler fan 71 is positioned further toward the equipment accommodating chamber MR than the heat exchange unit 70, with the propeller 71b facing the heat exchange portion 70a. The heat exchange unit 70 is located in a state where the heat exchange portion 70a faces (corresponds to) the first ventilation opening (exhaust port) 130.

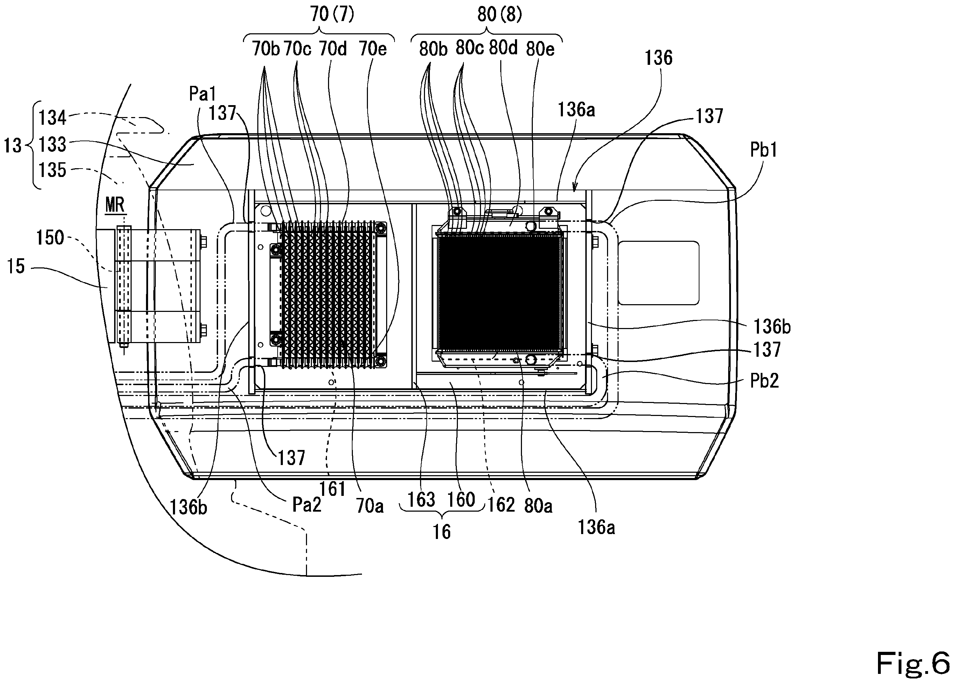

In the present embodiment, as illustrated in FIG. 6, the heat exchange unit 70 of the forced-air cooling oil cooler 7 is a corrugated-fin heat exchange unit. In other words, the heat exchange unit 70 of the forced-air cooling oil cooler 7 includes a plurality of flow passage-forming portions 70b that form the flow passage in which the hydraulic fluid flows and corrugated fins 70c each of which is disposed between two adjacent ones of the flow passage-forming portions 70b. The plurality of flow passage-forming portions 70b are each flattened in a radial direction and are arranged so as to be spaced apart from each other in the direction in which they are flattened. Each of the corrugated fins 70c is connected to the flow passage-forming portions 70b and 70b on both sides.

The heat exchange unit 70 of the forced-air cooling oil cooler 7 includes a primary flow passage 70d that communicates with one end portion of each of the plurality of flow passage-forming portions 70b and a secondary flow passage 70e that communicates with the other end portion of each of the plurality of flow passage-forming portions 70b. Accordingly, a primary pipe (a pipe, a pipeline) Pa1 is connected to the primary flow passage 70d, and a secondary pipe (pipe, pipeline) Pa2 is connected to the secondary flow passage 70e. The primary pipe Pa1 is a flow passage to allow flow of the hydraulic fluid (the hydraulic fluid that has increased in temperature due to work) from hydraulic actuators (e.g., the hydraulic cylinders 40a, 41a, and 40b). The secondary pipe Pa2 is a flow passage for returning the hydraulic fluid that has undergone heat exchange to a hydraulic fluid tank.

The primary pipe Pa1 and the secondary pipe Pa2 connected to the heat exchange unit 70 of the forced-air cooling oil cooler 7 are arranged along the inner surface of the rear hood 133. The primary pipe Pa1 and the secondary pipe Pa2 extend from the side, on which the other end of the rear hood 133 in the second direction is located, toward the side, on which the one end of the rear hood 133 in the second direction is located (the side on which the hinge 15 is located), and then extend into the equipment accommodating chamber MR through the vicinity of the hinge 15. In other words, the primary pipe Pa1 and the secondary pipe Pa2 extend across the hinge 15. In each of the primary and secondary pipes Pa1 and Pa2, at least a portion that corresponds to the hinge 15 is formed of a flexible member, such as a hydraulic hose, and allows the rear hood 133 to be opened and closed (to rotate around the support shaft 150 of the hinge 15).

In the heat exchange unit 70 of the forced-air cooling oil cooler 7, the heat exchange portion 70a is a portion where the plurality of flow passage-forming portions 70b and the corrugated fins 70c are arranged. In the heat exchange portion 70a, the air can pass between the adjacent flow passage-forming portions 70b in a direction that is perpendicular to the direction in which the plurality of flow passage-forming portions 70b are aligned, and the hydraulic fluid circulating within the flow passage-forming portions 70b exchanges heat with the air passing between the flow passage-forming portions 70b (the hydraulic fluid is cooled). The heat exchange unit 70 of the forced-air cooling oil cooler 7 is located such that a direction perpendicular to the flow passage-forming portion-alignment direction in which the plurality of flow passage-forming portions 70b are aligned, is aligned with the direction in which the first ventilation opening 130 is open.

The oil cooler fan 71 of the forced-air cooling oil cooler 7 is an axial fan. More specifically, as illustrated in FIG. 5 and FIG. 8, the oil cooler fan 71 of the forced-air cooling oil cooler 7 includes a casing 71c that has an annular shape, the electric motor 71d that is supported by the casing 71c, and the propeller 71b that is located in the casing 71c and coupled to an outlet shaft of the electric motor 71d.

In the oil cooler fan 71 of the forced-air cooling oil cooler 7, a wiring line Ca1 for supplying electric power from the battery 9 is connected to the electric motor 71d. The wiring line Ca1 extends from the side, on which the other end of the rear hood 133 in the second direction is located, toward the side, on which the one end of the rear hood 133 in the second direction is located (the side on which the hinge 15 is located), and then extends into the equipment accommodating chamber MR through the vicinity of the hinge 15. The wiring line Ca1 has flexibility and allows the rear hood 133 to be opened and closed (to rotate around the support shaft 150 of the hinge 15).

In the oil cooler fan 71 of the forced-air cooling oil cooler 7, a blower unit 71a (a portion that exhibits a blowing function) corresponds to a rotation region of the propeller 71b, that is, the opening region of the casing 71c. Accordingly, the oil cooler fan 71 is located such that the blower unit 71a (propeller 71b) faces the heat exchange portion 70a of the heat exchange unit 70, so that the air blown by the oil cooler fan 71 is sent between the flow passage-forming portions 70b.

As illustrated in FIG. 5, FIG. 6, and FIG. 8, the forced-air cooling radiator 8 includes the heat exchange unit 80 and the radiator fan (electric fan) 81. The heat exchange unit 80 includes the heat exchange portion 80a including the flow passage to allow the flow of the cooling water, which is a fluid, therethrough. The radiator fan 81 includes the propeller 81b and an electric motor 81d that rotationally drives the propeller 81b. In the forced-air cooling radiator 8, the radiator fan 81 is positioned further toward the equipment accommodating chamber MR than the heat exchange unit 80, with the propeller 81b facing the heat exchange portion 80a. The heat exchange unit 80 is located in a state where the heat exchange portion 80a faces (corresponds to) the second ventilation opening (exhaust port) 131.

In the present embodiment, as illustrated in FIG. 6, a plate-fin type heat exchange unit is employed as the heat exchange unit 80 of the forced-air cooling radiator 8. In other words, the heat exchange unit 80 of the forced-air cooling radiator 8 includes a plurality of flow passage-forming portions 80b that form the flow passage in which the cooling water circulates and a plurality of fins 80c that are arranged so as to extend across the plurality of flow passage-forming portions 80b and are aligned in the third direction. The plurality of flow passage-forming portions 80b each extend in the third direction and are arranged so as to be spaced apart from each other in a direction that is perpendicular to the third direction.

The heat exchange unit 80 of the forced-air cooling radiator 8 includes an upper tank 80d that communicates with an upper end portion of each of the plurality of flow passage-forming portions 80b and a lower tank 80e that communicates with a lower end portion of each of the plurality of flow passage-forming portions 80b. Accordingly, a primary pipe (a pipe) Pb1 that is a flow passage to allow flow of the cooling water (heated cooling water) that has passed through the prime mover 6 and the battery 9 is connected to the upper tank 80d, and a secondary pipe (a pipe) Pb2 that is a flow passage for returning the cooling water that has undergone heat exchange to the prime mover 6 and the battery 9 is connected to the lower tank 80e.

The primary pipe Pb1 and the secondary pipe Pb2 connected to heat exchange unit 80 of the forced-air cooling radiator 8 are arranged along the inner surface of the rear hood 133. The primary pipe Pb1 and the secondary pipe Pb2 extend from the side, on which the other end of the rear hood 133 in the second direction is located, toward the side, on which the one end of the rear hood 133 in the second direction is located (the side on which the hinge 15 is located), and then extend into the equipment accommodating chamber MR through the vicinity of the hinge 15. In other words, the primary pipe Pb1 and the secondary pipe Pb2 extend across the hinge 15. In each of the primary and secondary pipes Pb1 and Pb2, at least a portion that corresponds to the hinge 15 is formed of a flexible member, such as a hose, and allows the rear hood 133 to be opened and closed (to rotate around the support shaft 150 of the hinge 15).

In the heat exchange unit 80 of the forced-air cooling radiator 8, the heat exchange portion 80a is a portion where the plurality of flow passage-forming portions 80b and the plurality of fins 80c are arranged. In the heat exchange portion 80a, the air can pass between the adjacent flow passage-forming portions 70b in a direction that is perpendicular to the direction in which the plurality of flow passage-forming portions 80b are aligned, and the cooling water circulating within the flow passage-forming portions 80b exchanges heat with the air passing between the flow passage-forming portions 80b (the cooling water is cooled). The heat exchange unit 80 of the forced-air cooling radiator 8 is located such that a direction that is perpendicular to the flow passage-forming portion-alignment direction in which the plurality of flow passage-forming portions 80b are aligned, is aligned with the direction in which the second ventilation opening 131 is open.

The radiator fan 81 of the forced-air cooling radiator 8 is an axial fan. More specifically, as illustrated in FIG. 5 and FIG. 8, the radiator fan 81 of the forced-air cooling radiator 8 includes a casing 81c that has an annular shape, the electric motor 81d that is supported by the casing 81c, and the propeller 81b that is located in the casing 81c and coupled to an outlet shaft of the electric motor 81d.

A wiring line Ca2 for supplying the electric power from the battery 9 is connected to the electric motor 81d of the radiator fan 81 of the forced-air cooling radiator 8. The wiring line Ca2 extends from the side, on which the other end of the rear hood 133 in the second direction is located, toward the side, on which the one end of the rear hood 133 in the second direction is located (the side on which the hinge 15 is located), and then extends into the equipment accommodating chamber MR through the vicinity of the hinge 15. The wiring line Ca2 has flexibility and allows the rear hood 133 to be opened and closed (to rotate around the support shaft 150 of the hinge 15).

In the radiator fan 81 of the forced-air cooling radiator 8, a blower unit 81a (a portion that exhibits a blowing function) corresponds to a rotation region of the propeller 81b, that is, the opening region of the casing 81c. Accordingly, the radiator fan 81 is located such that the blower unit 81a (propeller 81b) faces the heat exchange portion 80a of the heat exchange unit 80, so that the air blown by the radiator fan 81 is sent between the flow passage-forming portions 80b.

As illustrated in FIG. 8, in the working machine 1 of the present embodiment, the forced-air cooling oil cooler 7 and the forced-air cooling radiator 8 are attached to the inner surface of the rear hood 133 in a state where their heat exchange units 70 and 80 are integrated with each other and where their fans 71 and 81 are integrated with each other. The fans 71 and 81 are individually controlled by the controller installed in the machine body 2.

The rear hood 133 includes the frame 136 that surrounds the ventilation openings 130 and 131 and the forced-air cooling heat exchangers 7 and 8 can be fitted onto the inner surface of the frame 136, the inner surface facing the equipment on the base plate 110 (facing the equipment accommodating chamber MR).

In the present embodiment, the frame 136 of the rear hood 133 is formed so as to surround the first ventilation opening 130 and the second ventilation opening 131 together. The frame 136 is formed to have a rectangular shape when viewed in the direction in which the first ventilation opening 130 and the second ventilation opening 131 are open. In other words, the frame 136 includes a pair of horizontal bars 136a that are arranged so as to be spaced apart from each other in the third direction and that extend straight in a direction perpendicular to the third direction and a pair of vertical bars 136b that are arranged so as to be spaced apart from each other in a direction perpendicular to the third direction and that extend straight in the third direction. The upper and lower ends of the pair of vertical bars 136b are connected to the pair of horizontal bars 136a. The first ventilation opening 130 and the second ventilation opening 131 are located between the pair of horizontal bars 136a and between the pair of vertical bars 136b.

The pair of vertical bars 136b and 136b each include notches 137 in which the primary pipes Pa1 and Pb1 and the secondary pipes Pa2 and Pb2, each of which is connected to a corresponding one of the heat exchange units 70 and 80, are extended. In addition, the pair of vertical bars 136b and 136b each include through holes H1 into which external thread members that fix at least one of a first attachment member 16 and a second attachment member 17, which will be described later, in place are inserted.

On this premise, the working machine 1 includes the first attachment member 16 to which the heat exchange unit 70 of the forced-air cooling oil cooler 7 and the heat exchange unit 80 of the forced-air cooling radiator 8 are attached, the first attachment member 16 being configured to be fitted into the frame 136, and the second attachment member 17 to which the fan 71 of the forced-air cooling oil cooler 7 and the fan 81 of the forced-air cooling radiator 8 are attached, the second attachment member 17 being configured to be fitted into the frame 136.

The first attachment member 16 includes a main body 160 that can be fitted into the frame 136. The main body 160 is a plate member having a rectangular shape when viewed in plan view. In other words, the main body 160 of the first attachment member 16 is a plate member that has approximately the same shape and approximately the same size as a rectangular region surrounded by the frame 136 and is configured to be capable of being fitted into the frame 136 in a state where a surface thereof faces the inner surface of the rear hood 133.

The main body 160 of the first attachment member 16 includes two openings 161 and 162 that are respectively formed in a region facing the heat exchange portion 70a of the heat exchange unit 70 and a region facing the heat exchange portion 80a of the heat exchange unit 80. The opening 161 corresponds to the heat exchange portion 70a and one of the ventilation openings (first ventilation opening 130) of the rear hood 133. The opening 162 corresponds to the heat exchange portion 80a and the other one of the ventilation openings (second ventilation opening 131) of the rear hood 133.

The two openings 161 and 162 are juxtaposed (arranged side by side) in a direction that is perpendicular to the third direction. In the first attachment member 16 of the present embodiment, the heat exchange units 70 and 80 are attached to one surface of the main body 160. Accordingly, the first attachment member 16 includes a partition 163 that is provided on the one surface of the main body 160, and the partition 163 extends in the third direction between the two openings 161 and 162. In other words, the first attachment member 16 includes the partition 163 that isolates a region in which the heat exchange unit 70 of the forced-air cooling oil cooler 7 is located from a region in which the heat exchange unit 80 of the forced-air cooling radiator 8 is located.

Accordingly, the heat exchange unit 70 of the forced-air cooling oil cooler 7 and the heat exchange unit 80 of the forced-air cooling radiator 8 are fixed (screw-fastened in the present embodiment) to the first attachment member 16 in a state where the heat exchange portions 70a and 80a face (correspond to) the openings 161 and 162, respectively. The first attachment member 16 is screw-fastened to the rear hood 133 in a state of being fitted into the frame 136.

Thus, by simply screw-fastening the first attachment member 16 (main body 160), to which the heat exchange unit 70 of the forced-air cooling oil cooler 7 and the heat exchange unit 80 of the forced-air cooling radiator 8 have been attached, while it is fitted into the frame 136, the heat exchange unit 70 of the forced-air cooling oil cooler 7 and the heat exchange unit 80 of the forced-air cooling radiator 8 are fixed to the rear hood 133 in a state where their heat exchange portions 70a and 80a correspond to the ventilation openings 130 and 131 (the first ventilation openings 130 and 131) of the rear hood 133, respectively.

As described above, since the pair of vertical bars 136b of the frame 136 each have the notches 137, the primary pipes Pa1 and Pb1 and the secondary pipes Pa2 and Pb2, each of which is connected to a corresponding one of the heat exchange units 70 and 80, are fitted into the notches 137. Thus, even when the first attachment member 16 (the heat exchange unit 70 of the forced-air cooling oil cooler 7 and the heat exchange unit 80 of the forced-air cooling radiator 8) is disposed in the region surrounded by the frame 136, the primary pipes Pa1 and Pb1 and the secondary pipes Pa2 and Pb2 do not interfere with the frame 136 (vertical bars 136b). Therefore, in a state where the primary pipes Pa1 and Pb1 and the secondary pipes Pa2 and Pb2 are each connected to a corresponding one of the heat exchange units 70 and 80, the attachment of the heat exchange units 70 and 80 can be performed.

The second attachment member 17 includes a main body 170 that can be fitted into the frame 136. In the present embodiment, the second attachment member 17 includes a pair of pieces 171 that are connected to the two ends of the main body 170 in a direction perpendicular to the third direction and that extend at an approximately right angle to the main body 170.

The main body 170 of the second attachment member 17 is a plate member having a rectangular shape when viewed in plan view. In other words, the main body 170 of the second attachment member 17 is a plate member that has approximately the same shape and approximately the same size as a rectangular region surrounded by the frame 136 and is configured to be capable of being fitted into the frame 136 in a state where a surface thereof faces the inner surface of the rear hood 133. The main body 170 of the second attachment member 17 has two openings 172 and 173 that are respectively formed in a region facing the heat exchange portion 70a of the heat exchange unit 70 and a region facing the heat exchange portion 80a of the heat exchange unit 80. The opening 172 corresponds to the heat exchange portion 70a and one of the ventilation openings (first ventilation opening 130) of the rear hood 133. The opening 173 corresponds to the heat exchange portion 80a and the other one of the ventilation openings (second ventilation opening 131) of the rear hood 133. The two openings 172 and 173 are juxtaposed (arranged side by side) in a direction that is perpendicular to the third direction.

In the second attachment member 17 of the present embodiment, the fans 71 and 81 are attached to one surface of the main body 170. The fan 71 of the forced-air cooling oil cooler 7 and the fan 81 of the forced-air cooling radiator 8 are fixed (screw-fastened in the present embodiment) to the second attachment member 17 in a state where the blower units 71a and 81a face (correspond to) the openings 172 and 173, respectively.

In a state where the second attachment member 17 is fitted into the frame 136, the pair of pieces 171 extend along the inner surfaces of the pair of vertical bars 136b. In a state where the second attachment member 17 is fitted into the frame 136, the pair of pieces 171 may extend along the outer surfaces of the pair of vertical bars 136b. Accordingly, the pair of pieces 171 each include notches 174 that correspond to the notches 137 of the pair of vertical bars 136b and holes H2 that correspond to the through holes H1 of the pair of vertical bars 136b and 136b. In the present embodiment, since the pieces 171 extend along the inner surfaces of the pair of vertical bars 136b, the holes H2 formed in the pieces 171 are threaded holes (so-called tap holes) into which the external thread members inserted through the through holes H1 of the vertical bars 136b are screwed. However, in the case where the pieces 171 extend along the outer surfaces of the vertical bars 136b, the through holes H1 of the vertical bars 136b are formed as threaded holes, and the holes H2 of the pieces 171 are formed as through holes into which the external thread members are inserted.

The notches 174 of the pair of pieces 171 are open in a direction opposite to a direction in which the notches 137 of the pair of vertical bars 136b are open. The combination of the notches 174 of the pieces 171 and the notches 137 of the vertical bars 136b encloses the primary pipes Pa1 and Pb1 and the secondary pipes Pa2 and Pb2.

Thus, by simply screw-fastening the second attachment member 17 (main body 170), to which the fan 71 of the forced-air cooling oil cooler 7 and the fan 81 of the forced-air cooling radiator 8 have been attached, while it is fitted into the frame 136, the fan 71 of the forced-air cooling oil cooler 7 and the fan 81 of the forced-air cooling radiator 8 are fixed to the rear hood 133 in a state where the blower unit 71a of the forced-air cooling oil cooler 7 and the blower unit 81a of the forced-air cooling radiator 8 respectively correspond to the heat exchange portions 70a and 80a of the heat exchange units 70 and 80 and to the ventilation openings (second ventilation opening 130 and 131) of the rear hood 133. In the state where the forced-air cooling oil cooler 7 and the forced-air cooling radiator 8 are fitted into the frame 136, the frame 136 surrounds the forced-air cooling oil cooler 7 and the forced-air cooling radiator 8, and this provides an airtight seal between the forced-air cooling heat exchangers 7 and 8 (the forced-air cooling oil cooler 7 and the forced-air cooling radiator 8) and their respective ventilation openings 130 and 131 (the first ventilation opening 130 and the second ventilation opening 131).

In the present embodiment, since the first attachment member 16 includes the partition 163, when the second attachment member 17 is fitted into the frame 136, the partition 163 of the first attachment member 16, which is fixed in place in the region surrounded by the frame 136, comes into contact with the main body 170 of the second attachment member 17. As a result, an air blowing path of the oil cooler fan 71 of the forced-air cooling oil cooler 7 and an air blowing path of the radiator fan 81 of the forced-air cooling radiator 8 are isolated from each other by the partition 163, allowing these air blowing paths to be effectively utilized in the heat exchange that is performed by the heat exchange units 70 and 80 and that relies on the air-blowing performance of each of the fans 71 and 81.

As described above, since the pair of vertical bars 136b of the frame 136 each have the notches 137, the primary pipes Pa1 and Pb1 and the secondary pipes Pa2 and Pb2, each of which is connected to a corresponding one of the heat exchange units 70 and 80, are fitted into the notches 137. When the second attachment member 17 is fitted into the frame 136, the primary pipes Pa1 and Pb1 and the secondary pipes Pa2 and Pb2 are fitted into the notches 174 of the pieces 171, and thus, the primary pipes Pa1 and Pb1 and the secondary pipes Pa2 and Pb2 do not interfere with the second attachment member 17 (the pieces 171). Therefore, in a state where the primary pipes Pa1 and Pb1 and the secondary pipes Pa2 and Pb2 are each connected to a corresponding one of the heat exchange units 70 and 80, the attachment of the second attachment member 17 (the fans 71 and 81) can be performed.

As described above, the heat exchange unit 70 and the fan 71 of the forced-air cooling heat exchanger 7 are attached to the rear hood 133, with the ventilation opening 130 as a reference point, and the heat exchange unit 80 and the fan 81 of the forced-air cooling heat exchanger 8 are attached to the rear hood 133, with the ventilation opening 131 as a reference point. Consequently, members (e.g., ducts or shrouds) that connect the forced-air cooling heat exchangers 7 and 8 to the ventilation openings 130 and 131, respectively, are not required, and their arrangement and positioning can be easily performed. Since the heat exchange units 70 and 80, the fans 71 and 81, and the ventilation openings 130 and 131 can be arranged close to each other, airtightness is maintained between the forced-air cooling heat exchangers 7 and 8 and their respective ventilation openings 130 and 131, preventing air leakage into the hood 13 during the air-blowing operation of the fans 71 and 81, and allowing the intake air to be effectively utilized in heat exchange.

The above embodiment (example embodiment of the present invention) is as described above, and the above-described embodiment includes numerous inventions, including the present invention, and specifically provides inventions described in the following items.

(Item 1) A working machine 1 comprising: a machine body 2; a hood 13 to define an exterior of the machine body 2; and a forced-air cooling heat exchanger 7, 8 to perform heat exchange between air and a fluid, wherein the hood 13 includes a ventilation opening 130, 131, and the forced-air cooling heat exchanger 7, 8 is attached to the hood 13 at a position corresponding to the ventilation opening 130, 131.

With the working machine 1 according to Item 1, the forced-air cooling heat exchangers 7 and 8 are attached to the inner surface of the hood 13, with the ventilation openings 130 and 131 of the hood 13 as reference points. As a result, the distance between the hood 13 and each of the forced-air cooling heat exchangers 7 and 8 is reduced, thereby enhancing airtightness. Therefore, in the working machine 1 according to the Item 1, the forced-air cooling heat exchangers 7 and 8 can each be disposed with enhanced heat exchange efficiency without the need for a complicated operation.

(Item 2) The working machine 1 according to Item 1, wherein the hood 13, including the ventilation opening 130, 131, includes a cover 133 that is openable and closable, and the forced-air cooling heat exchanger 7, 8 is attached to an inner surface of the cover 133.

With the working machine 1 according to Item 2, access to the interior of the hood 13 and access to the inner surface of the rear hood 133 are facilitated, enabling various operations, such as maintenance, assembly, and the like, to be performed easily and accurately.

(Item 3) The working machine 1 according to claim 2, wherein the cover 133 includes an attachment portion 136 to which the forced-air cooling heat exchanger 7, 8 is to be attached, and the attachment portion 136 is a frame 136 that surrounds the ventilation opening 130, 131 and is configured to have the forced-air cooling heat exchanger 7, 8 fitted thereto.

With the working machine 1 according to Item 3, by simply fitting the forced-air cooling heat exchangers 7 and 8 into the attachment portion (frame) 136, the forced-air cooling heat exchangers 7 and 8 can be attached to the hood 13 (cover 133) while being positioned with respect to the ventilation openings 130 and 131, respectively.

(Item 4) The working machine 1 according to Item 3, wherein the frame 136 is configured to provide airtight seal between the forced-air cooling heat exchanger 7, 8 and the ventilation opening 130, 131.

With the working machine 1 according to Item 4, the air is prevented from escaping from an area (region) surrounded by the frame 136, and the air is efficiently utilized in heat exchange.

(Item 5) The working machine 1 according to any one of Item 2 to Item 4, wherein the machine body 2 includes a support frame 14 that supports the cover 133, and a hinge 15 that couples the support frame 14 and the cover 133 to each other such that the support frame 14 and the cover 133 are pivotable relative to each other around a support shaft 150, the working machine 1 comprises a flow passage Pa1, Pb1, Pa2, Pb2 to allow the fluid to flow therethrough, the flow passage Pa1, Pb1, Pa2, Pb2 being connected to equipment provided at the machine body 2 and to the forced-air cooling heat exchanger 7, 8 attached to the inner surface of the cover 133, and the flow passage Pa1, Pb1, Pa2, Pb2 is provided in such a manner as to allow, while being connected to the equipment and the forced-air cooling heat exchanger 7, 8, the cover 133 to pivot around the support shaft 150.

With the working machine 1 according to Item 5, the cover 133 can be easily opened and closed. Even in the case where the forced-air cooling heat exchangers 7 and 8 are attached to the cover 133, which can be opened and closed, a fluid can be supplied to the forced-air cooling heat exchangers 7 and 8 via the pipes Pa1, Pb1, Pa2, and Pb2.

(Item 6) The working machine 1 according to any one of Item 1 to Item 5, wherein the forced-air cooling heat exchanger 7, 8 includes a fan 71, 81, and a heat exchange unit 70, 80 located at a position to face the fan 71, 81, and including a heat exchange portion 70a, 80a to perform heat exchange between cooling air generated by driving the fan 71, 81 and the fluid, and the heat exchange portion 70a, 80a or the fan 71, 81 faces the ventilation opening 130, 131.

With the working machine 1 according to Item 6, the cooling air generated by driving the fans 71 and 81 can be caused to pass through the heat exchange portion 70a and the ventilation openings 130 and 131.

(Item 7) The working machine 1 according to any one of Item 1 to Item 6, comprising: a working device 4 (4a, 4b) attached to the machine body 2 and to be actuated by a hydraulic fluid that is the fluid, wherein the forced-air cooling heat exchanger 7 is a forced-air cooling oil cooler to perform heat exchange between the hydraulic fluid and air.

With the working machine 1 according to Item 7, the hydraulic fluid that causes the working devices 4 (4a and 4b) to operate is appropriately cooled by the forced-air cooling oil cooler 7.

(Item 8) The working machine 1 according to any one of Item 1 to Item 6, comprising: a cooling-target device 6, 9 to be cooled by cooling water that is the fluid, wherein the forced-air cooling heat exchanger 8 is a forced-air cooling radiator to perform heat exchange between the cooling water and air.

With the working machine 1 according to Item 8, the cooling water that cools the equipment 6 and 9 to be cooled is appropriately cooled by the forced-air cooling radiator 8.

(Item 9) The working machine 1 according to any one of Item 1 to Item 6, comprising: a working device 4 (4a, 4b) attached to the machine body 2 and to be actuated by a hydraulic fluid that is the fluid; and a cooling-target device 6 to be cooled by cooling water that is the fluid, wherein the forced-air cooling heat exchanger 7, 8 includes: a forced-air cooling oil cooler 7 to perform heat exchange between the hydraulic fluid and air; and a forced-air cooling radiator 8 to perform heat exchange between the cooling water and air.

With the working machine 1 according to Item 9, the forced-air cooling oil cooler 7 and the forced-air cooling radiator 8, which serve as the forced-air cooling heat exchangers 7 and 8, are collectively attached to the hood 13, facilitating the maintenance and the like thereof. The hydraulic fluid that causes the working devices 4 (4a and 4b) to operate is cooled by the forced-air cooling oil cooler 7, and the cooling water that cools the equipment 6 to be cooled is cooled (subjected to heat exchange) by the forced-air cooling radiator 8, so that both the hydraulic fluid and the cooling water can be efficiently cooled.

(Item 10) The working machine 1 according to Item 9, wherein the forced-air cooling oil cooler 7 includes an oil cooler fan 71 to generate cooling air, and the forced-air cooling radiator 8 includes a radiator fan 81 to generate cooling air.

With the working machine 1 according to Item 10, in each of the forced-air cooling oil cooler 7 and the forced-air cooling radiator 8, cooling air is generated by the separate, independent fans 71 and 81, and thus, efficient heat exchange can be performed in each of the forced-air cooling oil cooler 7 and the forced-air cooling radiator 8.

(Item 11) The working machine 1 according to Item 10, wherein the hood 13 includes, as the ventilation opening 130, 131, a first ventilation opening 130 to allow flow of cooling air for the forced-air cooling oil cooler 7, and a second ventilation opening 131 to allow flow of cooling air for the forced-air cooling radiator 8.

With the working machine 1 according to Item 11, the cooling air of the forced-air cooling oil cooler 7 and the cooling air of the forced-air cooling radiator 8 can each be caused to pass through an independent (dedicated) path. As a result, the cooling air of one of the forced-air cooling oil cooler 7 and the forced-air cooling radiator 8 is prevented from affecting the heat exchange performed in the other of the forced-air cooling oil cooler 7 and the forced-air cooling radiator 8.

(Item 12) The working machine 1 according to Item 11, wherein the hood 13, including the ventilation opening 130, 131, includes a cover 133 that is openable and closable, the machine body 2 includes a support frame 14 to support the cover 133, and a hinge 15 to couple the support frame 14 and the cover 133 to each other such that the support frame 14 and the cover 133 are pivotable relative to each other around a support shaft 150, and the forced-air cooling oil cooler 7 and the forced-air cooling radiator 8 are positioned at an inner surface of the cover 133 and are juxtaposed along a direction perpendicular to a direction in which the support shaft 150 extends.

With the working machine 1 according to Item 12, by causing the cover 133 to pivot around the support shaft 150 of the hinge 15 (to be opened), access to the interior of the hood 13 becomes possible, and access to the two forced-air cooling heat exchangers (the forced-air cooling oil cooler 7 and the forced-air cooling radiator 8) also becomes possible.

(Item 13) The working machine 1 according to any one of Item 8 to Item 12, comprising: a battery unit 9; and an electric motor 6 to be driven by electric power supplied from the battery unit 9, wherein the cooling-target device is at least one of the battery unit 9 and the electric motor 6.

According to Item 13, the cooling water that has undergone heat exchange (cooling) in the forced-air cooling radiator 8 can effectively cool at least one of the battery unit 9 and the electric motor 6, each of which is the device to be cooled.

(Item 14) The working machine 1 according to Item 13, wherein the forced-air cooling heat exchanger 7, 8 includes a fan 71, 81, and a heat exchange unit 70, 80 located at a position to face the fan 71, 81 and including a heat exchange portion 70a, 80a to perform heat exchange between cooling air generated by driving the fan 71, 81 and the fluid, and the fan 71, 81 is configured to suck, as the cooling air, air surrounding the battery unit 9 and discharge the air to outside the machine body 2 through the ventilation opening 130, 131, or to suck, as the cooling air, air outside the machine body 2 through the ventilation opening 130, 131 and supply the air to surroundings of the battery unit 9.

With the working machine 1 according to Item 14, by driving the fan 71, the air surrounding the battery unit 9 is drawn in as cooling air and discharged to the outside of the machine body 2 through the ventilation opening 131, or the air outside the machine body 2 is drawn in as cooling air through the ventilation opening 131 and supplied to the surroundings of the battery unit 9, so that air exchange occurs around the battery unit 9, allowing the battery unit 9 to be cooled.

The present invention is not limited to the above-described embodiment and may be suitably changed within the gist of the present invention.

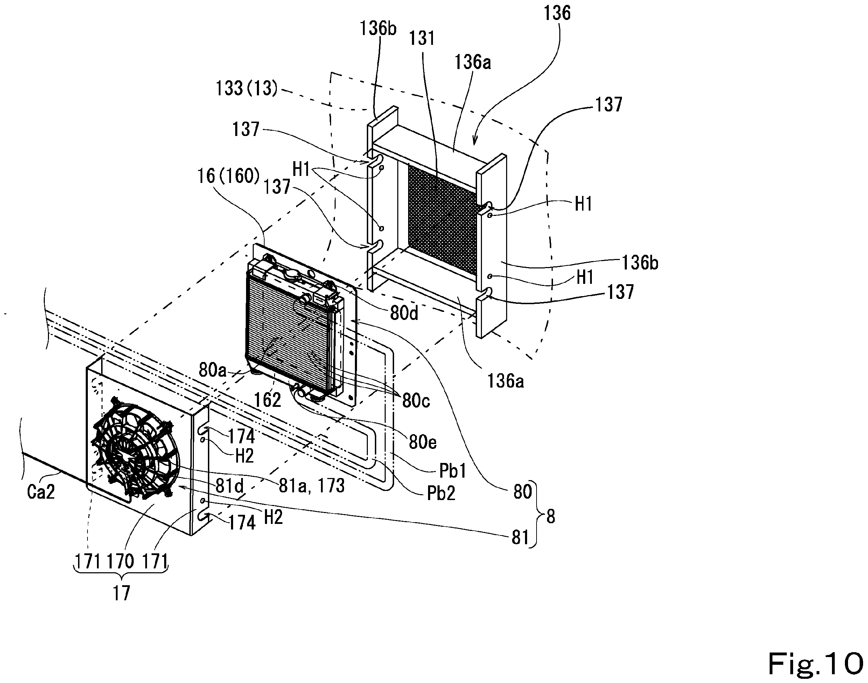

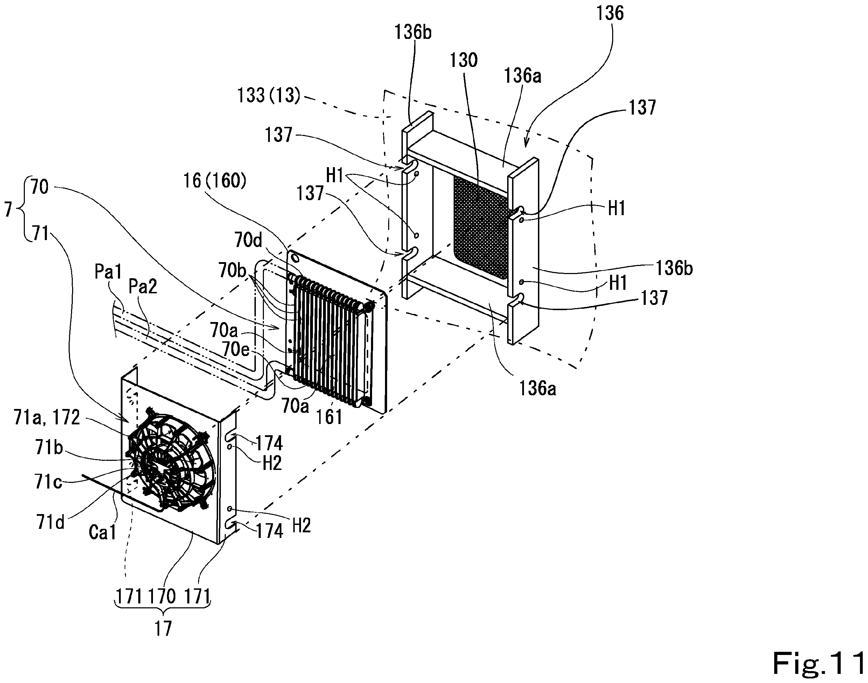

In addition to the forced-air cooling oil cooler 7 and the forced-air cooling radiator 8, or as a substitute for either or both of the forced-air cooling oil cooler 7 and the forced-air cooling radiator 8, for example, a forced-air cooling condenser for air conditioning that performs heat exchange between air and refrigerant, which is a fluid, may be attached, as a forced-air cooling heat exchange unit, to a cover member. Alternatively, only the forced-air cooling oil cooler 7 may be provided as illustrated in FIG. 10, or only the forced-air cooling radiator 8 may be provided as illustrated in FIG. 11.

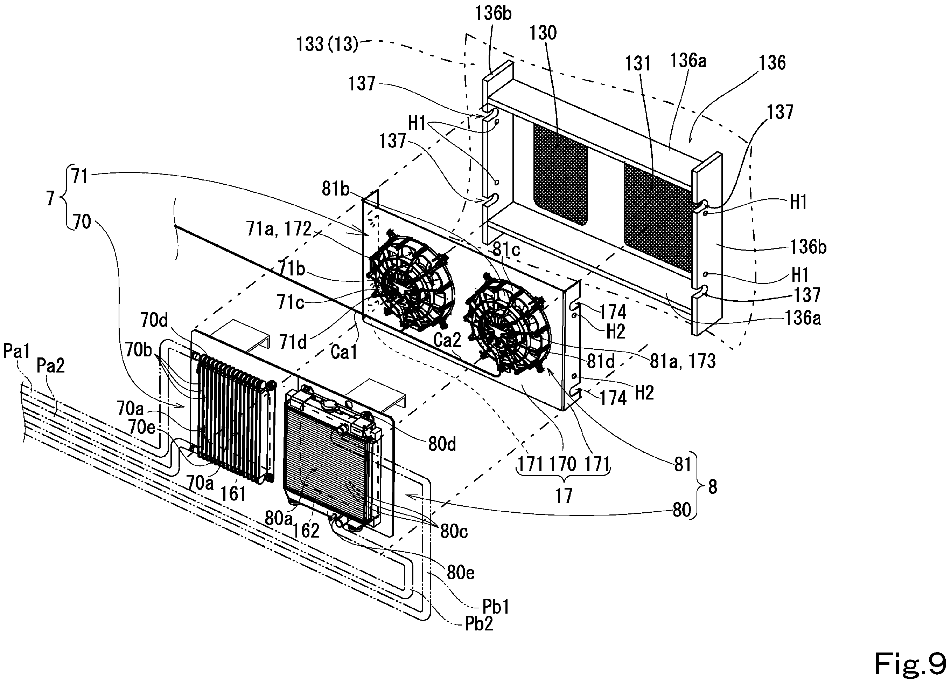

In the forced-air cooling heat exchangers 7 and 8 (forced-air cooling oil cooler 7 and forced-air cooling radiator 8) of the above-described embodiment, the heat exchange units 70 and 80 are positioned on the side on which the ventilation openings 130 and 131 (the rear hood 133) are present, and the fans (blowers) 71 and 81 are positioned on the side on which the equipment accommodating chamber MR is present. However, the present invention is not limited to this configuration. For example, as illustrated in FIG. 9, the fans (blowers) 71 and 81 may be positioned on the side on which the ventilation openings 130 and 131 (the rear hood 133) are present, and the heat exchange units 70 and 80 may be positioned on the side on which the equipment accommodating chamber MR is present.

The blowers 71 and 81 are not limited to being configured to draw in the air inside the equipment accommodating chamber MR and discharge the air to the outside of the working machine 1 through the ventilation openings 130 and 131, and the blowers 71 and 81 may be configured to draw in the air outside the working machine 1 into the equipment accommodating chamber MR through the ventilation openings 130 and 131.

The forced-air cooling heat exchangers 7 and 8 are not limited to being fixed to the inner surface of the rear hood 133 and may be fixed at positions corresponding to the ventilation openings 132 on the inner surfaces of the side hoods 135. Alternatively, ventilation openings may be formed in the upper hood 134, and the forced-air cooling heat exchangers 7 and 8 may be fixed at positions corresponding to these ventilation openings on the inner surface of the upper hood 134. Among the side hoods 135 and the upper hood 134, the hood to which the forced-air cooling heat exchangers 7 and 8 are fixed may be configured as a cover that can be opened and closed. By fixing the forced-air cooling heat exchangers 7 and 8 to the inner surface of a cover that can be opened and closed, workability for maintenance and the like is improved.

In the above-described embodiment, although a backhoe has been described as an example, the working machine 1 is not limited to a backhoe. For example, the working machine 1 may be an agricultural machine such as a combine, a rice transplanter, a lawn mower, or the like, may be a construction machine such as a wheel loader, a compact track loader, a skid-steer loader, or the like, or may be an industrial machine such as a forklift or the like.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine (1) comprising:
a machine body (2);
a hood (13) to define an exterior of the machine body (2); and
a forced-air cooling heat exchanger (7, 8) to perform heat exchange between air and a fluid, wherein
the hood (13) includes a ventilation opening (130, 131), and
the forced-air cooling heat exchanger (7, 8) is attached to the hood (13) at a position corresponding to the ventilation opening (130, 131).

2. The working machine (1) according to claim 1, wherein
the hood (13), including the ventilation opening (130, 131), includes a cover (133) that is openable and closable, and
the forced-air cooling heat exchanger (7, 8) is attached to an inner surface of the cover (133).

3. The working machine (1) according to claim 2, wherein
the cover (133) includes an attachment portion (136) to which the forced-air cooling heat exchanger (7, 8) is to be attached, and
the attachment portion (136) is a frame (136) that surrounds the ventilation opening (130, 131) and is configured to have the forced-air cooling heat exchanger (7, 8) fitted thereto.

4. The working machine (1) according to claim 3, wherein
the frame (136) is configured to provide airtight seal between the forced-air cooling heat exchanger (7, 8) and the ventilation opening (130, 131).

5. The working machine (1) according to any one of claim 2 to claim 4, wherein
the machine body (2) includes
a support frame (14) that supports the cover (133), and
a hinge (15) that couples the support frame (14) and the cover (133) to each other such that the support frame (14) and the cover (133) are pivotable relative to each other around a support shaft (150),
the working machine (1) comprises a flow passage (Pal, Pb1, Pa2, Pb2) to allow the fluid to flow therethrough, the flow passage (Pal, Pb1, Pa2, Pb2) being connected to equipment provided at the machine body (2) and to the forced-air cooling heat exchanger (7, 8) attached to the inner surface of the cover (133), and
the flow passage (Pal, Pb1, Pa2, Pb2) is provided in such a manner as to allow, while being connected to the equipment and the forced-air cooling heat exchanger (7, 8), the cover (133) to pivot around the support shaft (150).

6. The working machine (1) according to any one of claim 1 to claim 5, wherein
the forced-air cooling heat exchanger (7, 8) includes
a fan (71, 81), and
a heat exchange unit (70, 80) located at a position to face the fan (71, 81), and including a heat exchange portion (70a, 80a) to perform heat exchange between cooling air generated by driving the fan (71, 81) and the fluid, and
the heat exchange portion (70a, 80a) or the fan (71, 81) faces the ventilation opening (130, 131).

7. The working machine (1) according to any one of claim 1 to claim 6, comprising:
a working device (4 (4a, 4b)) attached to the machine body (2) and to be actuated by a hydraulic fluid that is the fluid, wherein
the forced-air cooling heat exchanger (7) is a forced-air cooling oil cooler to perform heat exchange between the hydraulic fluid and air.

8. The working machine (1) according to any one of claim 1 to claim 6, comprising:
a cooling-target device (6, 9) to be cooled by cooling water that is the fluid, wherein
the forced-air cooling heat exchanger (8) is a forced-air cooling radiator to perform heat exchange between the cooling water and air.

9. The working machine (1) according to any one of claim 1 to claim 6, comprising:
a working device (4 (4a, 4b)) attached to the machine body (2) and to be actuated by a hydraulic fluid that is the fluid; and
a cooling-target device (6) to be cooled by cooling water that is the fluid, wherein
the forced-air cooling heat exchanger (7, 8) includes:
a forced-air cooling oil cooler (7) to perform heat exchange between the hydraulic fluid and air; and
a forced-air cooling radiator (8) to perform heat exchange between the cooling water and air.

10. The working machine (1) according to claim 9, wherein
the forced-air cooling oil cooler (7) includes an oil cooler fan (71) to generate cooling air, and
the forced-air cooling radiator (8) includes a radiator fan (81) to generate cooling air.

11. The working machine (1) according to claim 10, wherein
the hood (13) includes, as the ventilation opening (130, 131),
a first ventilation opening (130) to allow flow of cooling air for the forced-air cooling oil cooler (7), and
a second ventilation opening (131) to allow flow of cooling air for the forced-air cooling radiator (8).

12. The working machine (1) according to claim 11, wherein
the hood (13), including the ventilation opening (130, 131), includes a cover (133) that is openable and closable,
the machine body (2) includes
a support frame (14) to support the cover (133), and
a hinge (15) to couple the support frame (14) and the cover (133) to each other such that the support frame (14) and the cover (133) are pivotable relative to each other around a support shaft (150), and
the forced-air cooling oil cooler (7) and the forced-air cooling radiator (8) are positioned at an inner surface of the cover (133) and are juxtaposed along a direction perpendicular to a direction in which the support shaft (150) extends.

13. The working machine (1) according to any one of claim 8 to claim 12, comprising:
a battery unit (9); and
an electric motor (6) to be driven by electric power supplied from the battery unit (9),
wherein
the cooling-target device is at least one of the battery unit (9) and the electric motor (6).

14. The working machine (1) according to claim 13, wherein
the forced-air cooling heat exchanger (7, 8) includes
a fan (71, 81), and
a heat exchange unit (70, 80) located at a position to face the fan (71, 81) and including a heat exchange portion (70a, 80a) to perform heat exchange between cooling air generated by driving the fan (71, 81) and the fluid, and
the fan (71, 81) is configured to suck, as the cooling air, air surrounding the battery unit (9) and discharge the air to outside the machine body (2) through the ventilation opening (130, 131), or to suck, as the cooling air, air outside the machine body (2) through the ventilation opening (130, 131) and supply the air to surroundings of the battery unit (9).
